# EUROPEAN PATENT SPECIFICATION

(11) **EP 1 276 674 B1**
(45) Date of publication and mention of the grant of the patent: **29.06.2005**
(21) Application number: 01951467.8
(22) Date of filing: 27.04.2001
(51) Int. Cl.: B65D 19/18, B65D 19/42

(54) **CONTAINER FOR TRANSPORT AND STORAGE OF FLUID SUBSTANCES**
TRANSPORT- UND LAGERBEHÄLTER FÜR FLÜSSIGKEITEN
ENSEMBLE CONTENEUR POUR LE TRANSPORT ET LE STOCKAGE DE SUBSTANCES FLUIDES

(30) Priority: 28.04.2000 NL 1015057
(43) Date of publication of application: 22.01.2003
(73) Proprietor: DSM IP Assets B.V., 6411 TE Heerlen (NL)
(72) Inventor: BRUINS, Jacobus, Reinder, NL-7213 ES Gorssel (NL); NOBEL, Leo, NL-3284 XD Zuid-Beijerland (NL)
(74) Representative: Matulewicz, Emil Rudolf Antonius, Dr.
(86) International application number: PCT/EP2001/004873
(87) International publication number: WO 2001/083309

(56) References cited:
- WO-A-89/06273
- WO-A-97/21598
- CH-A- 400 904
- GB-A- 1 084 780
- US-A- 3 847 407

## Description

The invention relates to a container for transport and storage of fluid substances, such as liquids or granular substances, comprising a container module provided with an inlet and an outlet for the fluid substances and a bearing board which is permanently attached to the container module or is integral with the container module.

Such a container is known from Dutch Patent Specification NL-1001903 having as a family member document WO-A-9721598. The disadvantage of the container with bearing board described in this patent is that it has to be moved by means of forklift trucks. During the use of such containers for the distribution and use of, for example, liquid baker's yeast or liquid bread improvers, this disadvantage consists in the fact that small-scale bakeries are not equipped for the use of forklift trucks, and the abovementioned containers therefore cannot be used.

The object of the invention is to provide a container which does not have said abovementioned disadvantage. This object is achieved by providing the bearing board with two wheels on the non-outlet side and two supports on the outlet side, and also with a bracket and a lifting means on the outlet side. The advantage of this container is that by means of the lifting means it is mobile and easy to move by one or more persons, which is particularly advantageous in small-scale bakeries. The features of the container are such that it can be transported through standard door openings and over doorsteps, and also downhill or uphill.

The capacity of the container module may vary from, for example, 250 to 1000 litres; the volume is preferably approximately 400-500 litres. The dimensions of the bearing board preferably remain constant, and the desired capacity is determined by the height measurement of the container module, with the proviso that the width is preferably no more than the measurement of the standard door opening. The width may vary between 70 and 90 cm, preferably between 75 and 80 cm, even more preferably between 77 and 79 cm.

The container module has a wall thickness of 4-10 millimetres, preferably of 5-10 millimetres, and more preferably of 6-10 millimetres.

The container module may be made of a rigid plastic material, preferably a plastic material which is so transparent in the case of the abovementioned wall thicknesses that the contents of the container are visible. When the container is used for liquid yeast or bread-improvers or for other applications in the food industry, it is preferable to manufacture said container from a food-grade synthetic material, such as, for example, linear low-density polyethylene (LLDPE).

The construction of the container module is such that filled containers can be stacked two high both in the case of stationary storage and in the case of transport. When empty, the container can be stacked in a maximum of five tiers. Furthermore, the bottom of the container module is preferably constructed in such a way that complete emptying can be achieved.

The inlet of the container module may consist of a filling aperture, which can be closed by a lid, on the top side of the container module, the filling aperture not being smaller than, for example, 150 mm, preferably no smaller than 200 mm. The outlet of the container module may consist of a tap preferably capable of allowing a liquid stream of at least 50, preferably at least 90, litres per minute to pass.

The container has on the non-outlet side two wheels having a diameter of, for example, at least 150 mm, preferably at least 200 mm. The wheels are preferably made of synthetic material, such as nylon, and are provided with bearings in such a way that the force needed for moving the container is minimized. On the outlet side the container has two supports, so that the container is stable during stationary storage and during transport. These supports are formed in such a way that when the container is stacked on top of a container underneath, they can grip around the top side of the container underneath, so that the container is also stable when stacked.

The container allows a bracket to be positioned on the outlet side, which makes it possible to move the container using a lifting means, preferably a lifting bogie. This means that the lifting point is situated in front of the container, preferably 15-30 cm from the outlet side of the container, which has the advantage that, through the leverage of this system, the required lifting force is reduced compared with a system in which the lifting point is underneath the container.

Furthermore, the container module may be provided on the non-outlet side with handles that do not project at the sides of the container module.

An exemplary embodiment of a container according to the invention is explained below in further detail below with reference to figures.
Figure 1 shows a perspective view of the container.
Figure 2 shows a side view of two stacked containers.
Figure 3 shows the top view of the container.

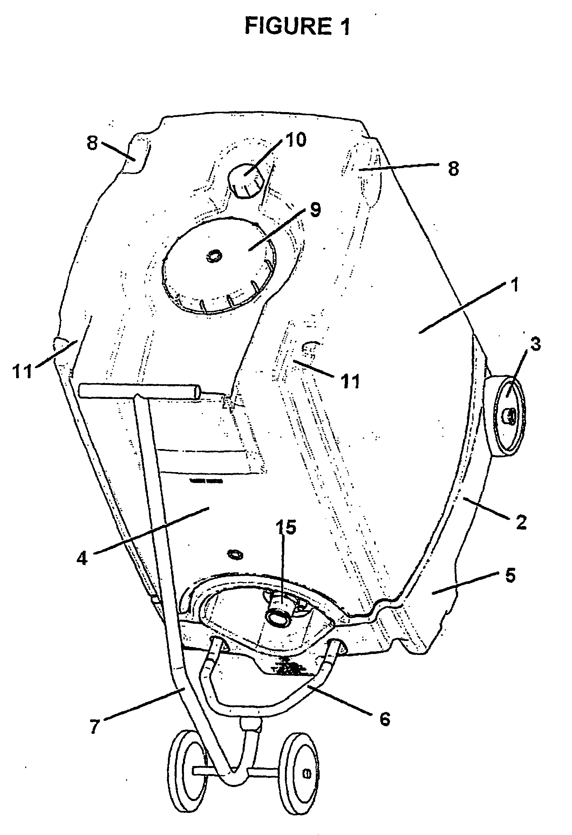

The container with a capacity of approximately 500 litres illustrated in Figure 1 is composed of a container module (1), which is fitted on a bearing board (2). The bearing board is provided with two wheels (3) and on the outlet side (4) with two supports (5), a bracket (6) and a lifting bogie (7). The top side of the container module (1) is provided with a filling aperture with lid (9) and an air vent (10), and on the outlet side the container module is provided with an outlet aperture provided with a valve (15).

The top side of the container is provided with two recesses (8) on the non-outlet side and with two recesses (11) on the outlet side.

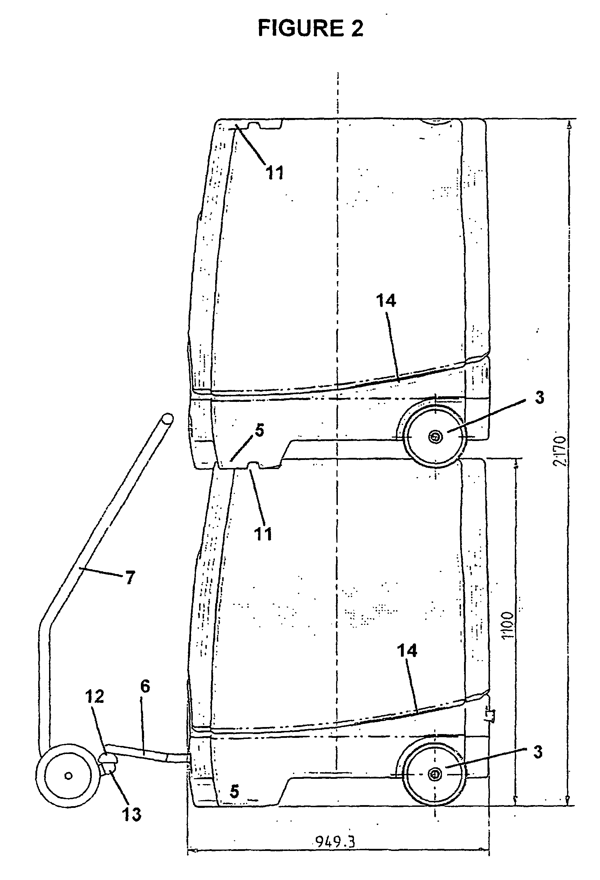

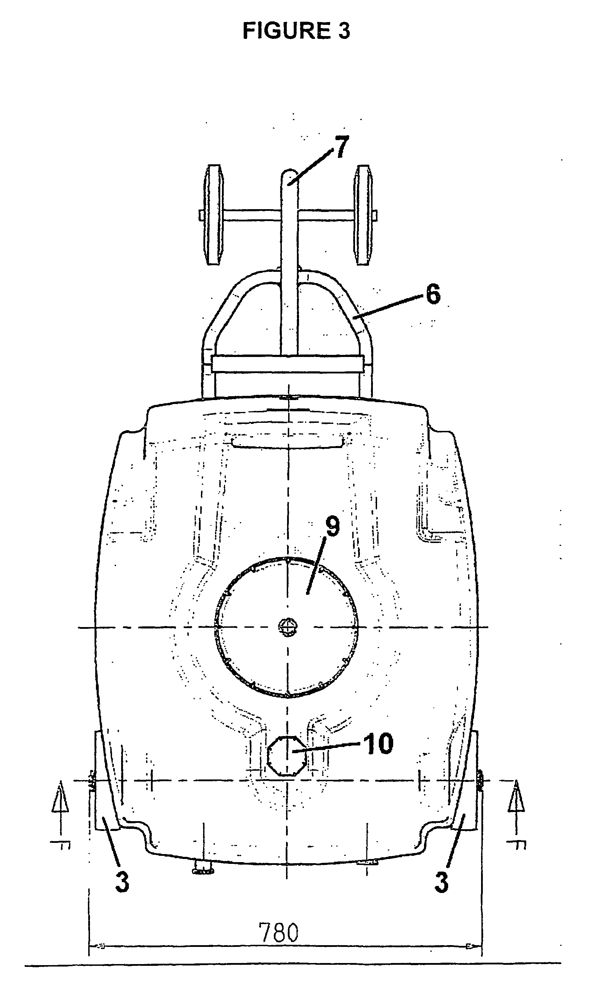

Figure 2 shows two stacked containers, with the bottom container being provided with a bracket (6) and a lifting bogie (7). The bracket (6) is provided with a cap (12) in which the ball (13) of the bogie (7) can engage. The wheels (3) of the top container fall into the recesses (8) of the bottom container; likewise, the supports (5) of the container above engage in the recesses (11) of the bottom container, and in so doing produce a stable stack. The container module further has a bottom (14) which slopes towards the outlet side. The top view of the container in Figure 3 shows the wheels (3), the lid (9) and the air vent (10), and also the bracket (6) and the lifting bogie (7).

## Claims

1. Container for transport and storage of fluid substances, such as liquids or granular substances, comprising a container module provided with an inlet and an outlet for the fluid substances, a bearing board which is permanently attached to the container module or is integral with the container module wherein the bearing board is provided with two supports (5) on the outlet side, **characterized in that** the bearing board (2) on which the container module rests is provided with:
- two wheels (3) on the non-outlet side (4) and
- a bracket (6) on the outlet side, and
- a lifting means (7) on the outlet side.

2. Container according to Claim 1, **characterized in that** the lifting means is attached to the bracket.

3. Container according to Claim 2, **characterized in that** the lifting means is a lifting bogie.

4. Container according to one of Claims 1-3, **characterized in that** the top side of the container module is provided with recesses (11) on the outlet side, the shape of which recesses is complementary to that of the supports (5).

5. Container according to one of the preceding claims, **characterized in that** the top side of the container module is provided with recesses (8) on the non-outlet side, the shape of which recesses is complementary to that of the wheels (3).

6. Container according to one of the preceding claims, **characterized in that** on the non-outlet side the container module is provided with handles that do not project at the sides of the container module.

7. Use of a container as defined in any of the preceding claims for the transport and storage of fluid substances.

8. Use according to claim 7 wherein the fluid substance is liquid baker's yeast or a liquid bread improver.

## Patentansprüche

1. Behälter für den Transport und die Lagerung von flüssigen Stoffen, wie Flüssigkeiten oder granulierten Stoffen, mit einem Behältermodul, das mit einem Einlaß und einem Auslaß für die flüssigen Stoffe versehen ist, einer Lagerplatte, die permanent an dem Behältermodul angebracht oder einstückig mit dem Behältermodul ausgebildet ist, wobei die Lagerplatte mit zwei Stützen (5) an der Auslaßseite ausgerüstet ist, **dadurch gekennzeichnet, dass** die Lagerplatte (2), auf der das Behältermodul ruht, mit
- zwei Rädern (3) an der Nichtauslaßseite (4) und
- einem Tragarm (6) an der Auslaßseite sowie
- einer Hebevorrichtung (7) an der Auslaßseite
versehen ist.

2. Behälter nach Anspruch 1, **dadurch gekennzeichnet, dass** die Hebevorrichtung an dem Tragarm angebracht ist.

3. Behälter nach Anspruch 2, **dadurch gekennzeichnet, dass** die Hebevorrichtung ein Hebeuntergestell ist.

4. Behälter nach einem der Ansprüche 1 bis 3, **dadurch gekennzeichnet, dass** die Oberseite des Behältermoduls an der Auslaßseite mit Ausnehmungen (11) versehen ist, deren Form zu jener der Stützen (5) komplementär ist.

5. Behälter nach einem der vorstehenden Ansprüche, **dadurch gekennzeichnet, dass** die Oberseite des Behältermoduls an der Nichtauslaßseite mit Ausnehmungen (8) versehen ist, deren Form zu jener der Räder (3) komplementär ist.

6. Behälter nach einem der vorstehenden Ansprüche, **dadurch gekennzeichnet, dass** die Nichtauslaßseite des Behältermoduls mit Handgriffen versehen ist, die an den Seiten des Behältermoduls nicht vorstehen.

7. Verwendung eines Behälters nach einem der vorstehenden Ansprüche für den Transport und die Lagerung von flüssigen Stoffen.

8. Verwendung nach Anspruch 7, worin der flüssige Stoff flüssige Bäckerhefe oder ein flüssiges Brotverbesserungsmittel ist.

## Revendications

1. Conteneur pour le transport et le stockage de substances fluides, telles que des liquides ou des substances granulaires, comprenant un module de conteneur muni d'une entrée et d'une sortie pour les substances fluides, un panneau portant qui est en permanence relié au module de conteneur ou fait partie intégrante du module de conteneur, dans lequel le panneau portant est muni de deux supports (5) du côté de la sortie, **caractérisé en ce que** le panneau portant (2) sur lequel le module de conteneur repose est muni :
- de deux roues (3) du côté de non sortie (4) et
- d'une console (6) du côté de la sortie, et
- d'un moyen de levage (7) du côté de la sortie.

2. Conteneur selon la revendication 1, **caractérisé en ce que** le moyen de levage est relié à la console.

3. Conteneur selon la revendication 2, **caractérisé en ce que** le moyen de levage est un train de levage.

4. Conteneur selon l'une des revendications 1 à 3, **caractérisé en ce que** le côté supérieur du module de conteneur est muni de renfoncements (11) du côté de la sortie, dont la forme est complémentaire à celle des supports (5).

5. Conteneur selon l'une des revendications précédentes, **caractérisé en ce que** le côté supérieur du module de conteneur est muni de renfoncements (8) du côté de non sortie, dont la forme est complémentaire à celle des roues (3).

6. Conteneur selon l'une des revendications précédentes, **caractérisé en ce que**, du côté de non sortie, le module de conteneur est muni de poignées qui ne se projettent pas sur les côtés du module de conteneur.

7. Utilisation d'un conteneur selon l'une quelconque des revendications précédentes pour le transport et le stockage de substances fluides.

8. Utilisation selon la revendication 7, dans laquelle la substance fluide est de la levure de boulangerie liquide ou un améliorant de fermentation liquide.
